Europäisches Patentamt

European Patent Office

Office européen des brevets

(11) Publication number: **0 032 787**
A2

# EUROPEAN PATENT APPLICATION

(21) Application number: **81300052.8**

(51) Int. Cl.³: **H 01 M 4/88, C 25 D 15/02**

(22) Date of filing: **07.01.81**

(30) Priority: **21.01.80 JP 4601/80**

(43) Date of publication of application: **29.07.81**
Bulletin 81/30

(84) Designated Contracting States: **AT BE CH DE FR GB IT LI LU NL SE**

(71) Applicant: **Hitachi, Ltd., 5-1, Marunouchi 1-chome, Chiyoda-ku Tokyo 100 (JP)**

(72) Inventor: **Kawamura, Go, 4-30-3 Simoigusa Suginami-ku, Tokyo (JP)**

(74) Representative: **Paget, Hugh Charles Edward, MEWBURN ELLIS & CO. 70/72 Chancery Lane, London WC2A 1AD (GB)**

(54) Method of manufacturing a catalytic electrode and a fuel cell containing an electrode manufactured by the method.

(57)    An electrode substrate (1) is dipped into an aqueous solution of a catalyst (3) in which carbon powder is suspended. The solution is circulated by a pump (5) through a tank (4). Electrodeposition is then carried out by employing the electrode substrate (1) as a cathode, so as to fix the carbon powder and the catalyst onto the electrode substrate.

A catalyst electrode thus formed does not contain any binder such as polytetrafluoroethylene, so that it does not show any excessive voltage rise when in operation in a fuel cell. In addition, it is very easy to manufacture in comparison with catalytic electrodes manufactured according to prior art methods.

- 1 -                    0032787

"Method of manufacturing a catalytic electrode, and a fuel cell containing an electrode manufactured by the method"

This invention relates to a method of manufacturing a catalytic electrode, and also to a fuel cell containing one or more catalytic electrodes made by the method.

The fuel electrodes of various fuel cells which employ hydrazine, methanol etc. as fuel have generally comprised carbon moldings which contain catalysts such as platinum and palladium. In forming these catalytic electrodes, the carbon granules and the catalyst need to be supported as uniformly and as firmly as possible on a net or lattice form electrode substrate which is made of tantalum or the like. Usually, the electrodes are formed by either of the following two methods:

(1)      The carbon granules carrying the catalyst, e.g. platinum, are kneaded with an emulsion of plastics material, for example polytetrafluoroethylene, and the resultant emulsion is applied to the electrode substrate. By then applying pressure, the carbon granules and the catalyst are bonded onto the electrode substrate with the plastics emulsion.

(2) Carbon granules alone are bonded onto the electrode substrate by method (1) above, and the catalyst subsequently applied to them. In this case, either an electrolytic reduction (electrodeposition) process, a gas phase reduction process employing hydrogen gas, or a liquid reduction process employing formalin etc. may be used to apply the catalyst.

However, these prior-art methods of manufacturing catalytic electrodes have the disadvantage that the manufacturing steps are complicated. Moreover, since plastics such as polytetrafluoroethylene are employed as the binder, the electrical resistance of the electrode is large.

An object of this invention is to eliminate the disadvantages involved in the prior-art methods of manufacturing catalytic electrodes, and to provide a method of manufacturing a catalytic electrode which is easy to carry out and which can readily form a catalytic electrode having a high conductivity.

According to the present invention an electrode substrate is dipped into a catalyst solution in which carbon powder is suspended. Electrodeposition is then carried out using the electrode substrate as a cathode, so as to fix the catalyst and the carbon powder onto the electrode substrate uniformly and firmly without using any plastics binder material.

Preferred embodiments of the present invention will now be described by way of example with reference to the accompanying drawings in which:-

Figure 1 is a schematic diagram explaining the construction of the present invention, while

Figure 2 is a diagram showing results achieved by the present invention.

Example 1:

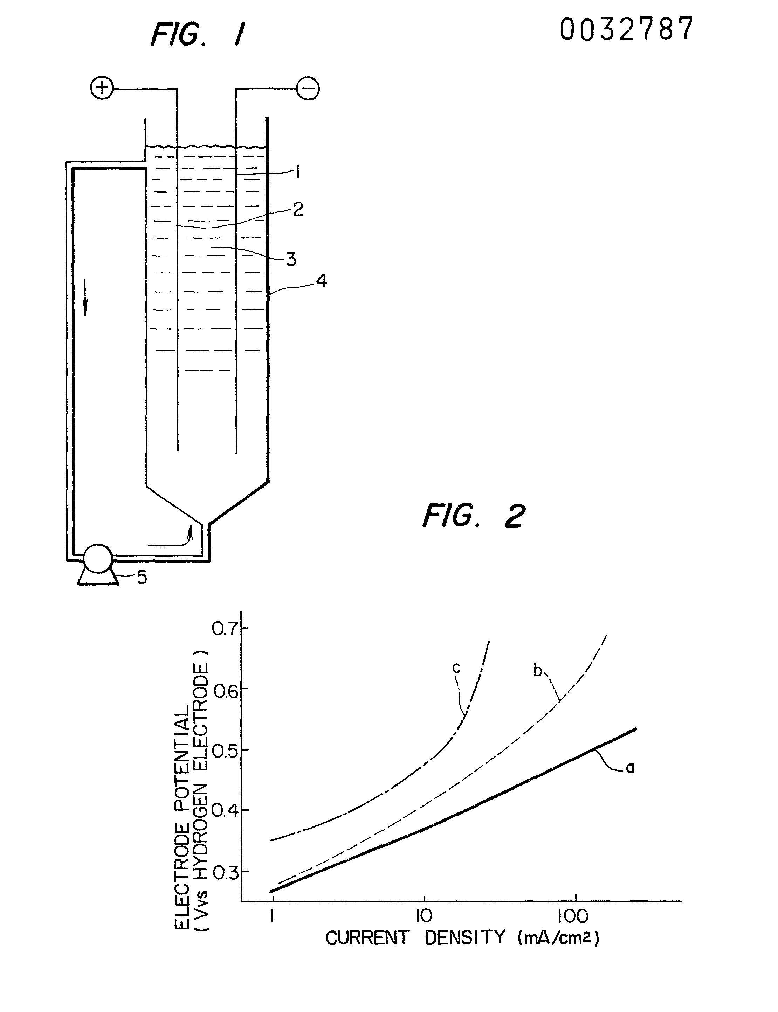

Figure 1 is a schematic diagram showing an apparatus which is used for manufacturing a catalytic electrode in accordance with the present invention.

An electrolytic solution was formed by dissolving platinic chloride ($H_2PtCl_6$) and rhenium heptoxide ($Re_2O_7$) in water at concentrations of 0.01 mol/$\ell$ and 0.005 mol/$\ell$ respectively. Active carbon powder of grain size about 5 μm was also suspended in the solution at a concentration of 2.5 gr/$\ell$ .

1.6$\ell$ of the electrolytic solution was put in a container 4. The electrolytic solution 3 was circulated through the container 4 by means of a pump 5 and electrodeposition was carried out by

0032787

applying a voltage across the two electrodes. The anode was a platinum net 2 and the cathode a net 1 (area: 120 $cm^2$) made of expanded tantalum metal.

When the electrolysis was performed at a current density of 20 $mA/cm^2$ for 1.5 hours, the platinum contained in the electrolytic solution 3 was fully precipitated onto the cathode 1, the quantity precipitated being approximately 30 $mg/cm^2$. Carbon was precipitated on the cathode 1 simultaneously with the platinum, and the quantity thereof precipitated was approximately 10 $mg/cm^2$. The thickness of the precipitated layer was approximately 0.5 mm.

Even when the tantalum net to which the platinum and carbon were fixed was shaken violently or was rubbed by hand, the platinum and carbon fixed to it did not exfoliate. It was concluded that the platinum and carbon was fixed with sufficient strength for practical use as the catalytic electrode of a fuel cell.

As is well known, carbon powder itself is not ionized in an electrolytic solution. Therefore, it is generally assumed that the carbon powder is not precipitated as a result of electrolysis or electrodeposition. If a suspension containing only the carbon powder is electrolysed, the carbon powder will not precipitate on the cathode.

In the method of this invention a solution is electrolysed which contains the carbon powder in suspension as well as the catalyst in solution, rather than a suspension which contains only carbon powder. Both the carbon powder and the catalyst are thus precipitated and fixed onto the cathode.

The reason why the carbon powder precipitates when the catalyst is present in the electrolytic solution is not fully known. It is conjectured, however, that the layers of carbon and catalyst are formed such that carbon granules are trapped by needle-like crystals of platinum, according to the following sequence of events. The platinum first precipitates on the cathode as a fine needle crystal, and the carbon powder is then fixed as it becomes entangled with the needle crystals. More needle platinum crystals then precipitate onto the carbon powder and the sequence is repeated. Accordingly, when a suspension of carbon powder not containing the dissolved catalyst is used, precipitation of the carbon powder does not take place, and thus the catalyst must always be present in the solution with the carbon powder for the carbon powder to be deposited.

The catalytic electrode thus obtained was used as the methanol electrode of a methanol fuel cell, and the potential - current density characteristic of this electrode is shown by curve $\underline{a}$ in Figure 2. The electrolytic solution used in the methanol fuel cell was a solution in which 3 mols/$\ell$ of sulfuric acid and 1 mol/$\ell$ of methanol were dissolved.

For the purposes of comparison, the characteristics of catalytic electrodes formed by the prior-art methods are shown at curves $\underline{b}$ and $\underline{c}$ in Figure 2.

Curve $\underline{b}$ indicates the results obtained with a catalytic electrode which was formed by fixing carbon powder to an electrode substrate with an emulsion of polytetrafluoroethylene and thereafter electrodepositing a platinum-rhenium catalyst. Curve $\underline{c}$ indicates the results obtained with a catalytic electrode which was formed by first depositing the platinum-rhenium catalyst on the carbon powder and then fixing them to the substrate with an emulsion of polytetrafluoroethylene. The amount of platinum carried on each of the electrodes was 30 mg/cm$^2$. In each of the above cases, the electrode substrate used was a net made of expanded tantalum metal (surface area: 120 cm$^2$) identical with that employed in the present example of the invention.

As is apparent from curve a in Figure 2, in the case of the electrode formed according to the present invention, the relationship between the logarithm of the current density and the potential is substantially rectilinear, and even when the current density increases, the potential is not increased unduly.

In contrast, as can be seen from curves b and c, the catalytic electrodes formed by the prior-art methods have increased electrode resistances due to the use of the binder (polytetrafluoroethylene) and this results in the relationships between the current density and the potential not being rectilinear and in increased current densities leading to remarkably high potentials.

Needless to say, the voltage of a fuel cell is expressed by the potential difference between the counter electrode (air electrode) and the catalytic electrode. Therefore, a rise in the potential of the catalytic electrode signifies that the voltage generated by the fuel cell will be lowered to a corresponding extent, and that as a result a large number of cells may be required to attain a predetermined voltage.

Leaving aside the case of curve c where the characteristic is extremely inferior, this embodiment of the invention will be compared with the case of curve b.

A discharge current density of at least 50 - 100 mA/cm$^2$ is necessary for a fuel cell to be put to practical use. The voltages of the cells when they are discharged at current densities of 100 mA/cm$^2$ will now be calculated with reference to Figure 2. The potential of the catalytic electrode embodying this invention is 0.48 V, whereas the potential in the case of the curve b is about 0.6 V.

Since the potential of the air electrode is approximately 0.9 V, the electromotive forces which are generated with these electrodes are as follows,

$$0.9 - 0.48 = 0.42 \text{ V}$$

and

$$0.9 - 0.6 = 0.3 \text{ V}$$

Accordingly, the number of cells required to obtain an electromotive force of 100 V is: with cells of this invention

$$100 \div 0.42 = 240 \text{ cells}$$

and in the case of the curve b

$$100 \div 0.3 = 330 \text{ cells.}$$

Thus with a cell having catalytic electrodes according to the present invention, the number of cells required is considerably smaller than with cells using prior art catalytic electrodes.

Furthermore, since in the method of this invention the electrode substrate is merely dipped in the suspension and the electrodeposition is performed (preferably while stirring the solution), it is much simpler and easier than a method requiring the two steps of depositing the catalyst and applying the carbon powder as in the prior art. Not only the carbon powder and the catalyst, but also at least one of rhenium, osmium, tin, ruthenium etc. can be similarly fixed as a promoter.

Example 2:

An electrolytic solution was formed consisting of nickel sulfate and platinic chloride dissolved in water at concentrations of 0.01 mol/$\ell$ and 0.003 mol/$\ell$ respectively, and containing active carbon of grain size approximately 5 μm suspended at a concentration of 2.5 gr/$\ell$ .

1.6 $\ell$ of this electrolytic solution was placed in the apparatus shown in Figure 1. Electrodeposition was carried out in a similar manner to that described in Example 1 to form a catalytic electrode. The nickel and platinum in the electrolytic solution were fully precipitated on the electrode, and the quantity of the carbon powder precipitated was approximately 15 mg/cm$^2$. As in the case of Example 1, the nickel, platinum or the carbon powder was not removed from the catalytic electrode even when rubbed by hand and shaken violently.

The catalytic electrodes formed in Example 1 and Example 2 are very suitable as catalytic electrodes for a methanol fuel cell and a hydrazine fuel cell, respectively. When, in electrodepositing the catalyst, an emulsion of polytetrafluoroethylene is suspended in the electrolytic solution, the polytetrafluoroethylene is fixed on the substrate along with the carbon powder and the catalyst, and a so-called waterproof electrode is formed. This electrode can also be used for the aforementioned fuel cells or as the gas electrode of an oxygen-hydrogen fuel cell or the like.

In this invention, while an acidic liquid containing sulfuric acid, phosphoric acid or the like is ordinarily employed as the electrolytic solution an alkaline liquid containing sodium hydroxide or the like may be used.

Various catalysts which are used in fuel cells such as platinum, nickel, silver and palladium can be put into solutions and be precipitated and fixed in the same manner as in the foregoing examples.

Niobium, zirconium etc. can be used instead of tantalum as the electrode substrate. With a catalytic electrode in a fuel cell employing an alkaline electrolytic solution, nickel is particularly preferable. If the voltage applied to such an electrode substrate is more negative than approximately -0.05 V (with respect to the hydrogen electrode), the electrodeposition can be performed without hindrance.

Unless the voltage applied to the electrode substrate during the electrodeposition process is more negative than approximately -0.05 V, various metals used as the catalysts such as platinum, nickel, silver and palladium will not be sufficiently reduced, and the catalyst and the carbon powder will be poorly fixed to the electrode substrate. Therefore, the applied voltage is preferably more negative than -0.05 V.

As the voltage becomes more negative, the current density gradually increases. For example, the current densities when the voltages are -0.05 V and -0.3 V are 10 mA/cm$^2$ and 1 A/cm$^2$ respectively.

When the current density is high, the quantity of gas generated and energy consumed during the electrodeposition process increases conspicuously, and the power supply unit required for the electrodeposition process must be large.

For such reasons, it is unfavourable to apply a very large negative voltage to the electrode substrate.

It is difficult in practice to apply a negative voltage below approximately -1 V.

As is apparent from the above description, this invention may merely require the dipping of the substrate in a solution and the application of a voltage, so that the process may be very simple and easy. A catalytic electrode formed according to this invention can have considerably better characteristics than electrodes formed by various prior-art manufacturing methods, and can produce highly favourable results when used in various fuel cells. In this invention, when the concentration range of carbon powder in an electrolytic solution is set at approximately 0.5 - 50 gr/$\ell$ , particularly favourable results are produced. While the concentration of catalyst used can be within a wide range, this concentration and the quantity of the solution may be adjusted so that the quantity of electrodeposition may be at least approximately 10 mg/$cm^2$.

CLAIMS:

1. A method of manufacturing a catalytic electrode comprising an electrode substrate carrying the catalyst and carbon powder, wherein the catalyst is applied to the substrate by electrodeposition from an aqueous solution of the catalyst,

characterised in that:

the said aqueous solution (3) used for the electrodeposition contains suspended carbon powder, which is deposited onto the substrate (2) together with the catalyst during the electrodeposition, the substrate (2) being the cathode and another electrode being the anode in the electrodeposition.

2. A method according to claim 1, wherein said catalyst is one or more of platinum, palladium, silver and nickel.

3. A method according to claim 1 or claim 2 wherein said aqueous solution also contains a promoter.

4. A method according to claim 3 wherein said promoter is one or more of rhenium, tin, ruthenium and osmium.

5. A method according to any one of the preceding claims wherein said electrodeposition is performed by applying to said electrode substrate a voltage which is more negative than -0.05 V.

0032787

6.      A method according to claim 5, wherein said voltage applied to said electrode substrate is in the range -0.05 to -1 V.

7.      A method according to any one of the preceding claims wherein the quantity of said carbon powder suspended in said aqueous solution is in the range 0.5 to 50 g/$\ell$ .

8.      A fuel cell having at least one catalytic electrode manufactured by a process according to any one of the preceding claims.

FIG. 1

0032787

FIG. 2